# EUROPEAN PATENT APPLICATION

(11) **EP 1 834 811 A1**
(43) Date of publication of application: **19.09.2007**
(21) Application number: 07104044.8
(22) Date of filing: 13.03.2007
(51) Int. Cl.: B60C 1/00, C08K 5/01, C08L 9/06, C08L 21/00, C08L 25/08

(54) **Rubber composition**

(30) Priority: 14.03.2006 JP 2006069666
(71) Applicant: THE YOKOHAMA RUBBER CO., LTD., Tokyo 105-8685 (JP)
(72) Inventor: Onoi, Hidekazu, Hiratsuka-shi Kanagawa 254-8601 (JP)
(74) Representative: Vossius & Partner

(57) **Abstract**

A rubber composition containing 100 parts by weight of a rubber, 5 to 50 parts by weight of an aromatic oil having a dimethyl sulfoxide (DMSO) extract content measured by an IP346/92 method of less than 3% by weight and 2 to 40 parts by weight of a dipentene aromatic vinyl copolymer resin having a softening point of 60 to 130°C add a pneumatic tire using the same for a tread part whereby the grip performance of a rubber composition containing an aromatic oil having a DMSO extract content of less than 3% by weight is improved.

## Description

The present invention relates to a rubber composition, more particularly relates to a rubber composition containing an aromatic oil having a dimethyl sulfoxide (DMSO) extract content of less than 3% by weight, wherein a dipentene aromatic vinyl copolymer resin having a softening point of 60°C to 130°C is added to improve the grip performance of the tire, without causing deterioration of the rolling resistance.

A rubber composition for a pneumatic tire uses an aromatic group-based oil (i.e., aromatic process oil) for the purpose of softening the rubber composition or for improving the processability of the rubber composition. However, recently issue has been raised that the polycyclic aromatics (PCA) contained in this aromatic process oil are not environmentally friendly. From this viewpoint, aromatic oils having a DMSO extracts content called "treated distilled aromatic extracts (T-DAE)" and "solvent residue aromatic extracts (S-RAE)" of less than 3% by weight are started to be used.

When a low PCA aromatic oil is used for a rubber composition for tire tread, since the oil per se has a low softening point or viscosity, there is the problem that the viscoelastic characteristics of the rubber composition will change, the brittle temperature will decrease and the tire grip performance will decrease. For this reason, there is a proposal for adding a resin to prevent a decrease in the grip performance even when a low PCA oil is used (see Japanese Patent Publication (A) No. 11-130909), but so long as a specific resin is not used, the problem remains of a decrease in the modulus or a deterioration of the abrasion resistance.

Accordingly, an object of the present invention is to improve the grip performance of a rubber composition using aromatic oil (i.e., an aromatic process oil) having a DMSO extract content of less than 3% by weight.

In accordance with the present invention, there is provided a rubber composition comprising 100 parts by weight of a rubber, 5 to 50 parts by weight of an aromatic oil having a dimethyl sulfoxide (DMSO) extract content determined by an IP346/92 method of less than 3% by weight, and 2 to 40 parts by weight of a dipentene aromatic vinyl copolymer resin having a softening point of 60 to 130°C.

In accordance with the present invention, there is further provided a pneumatic tire using the above rubber composition for a tire tread part.

According to the present invention, it is possible to compound, into a rubber composition, a combination of a low PCA aromatic oil and a specific dipentene aromatic vinyl copolymer resin so as to improve the grip performance, without deteriorating the tire rolling resistance.

The inventors engaged in research to solve the above problems and, as a result, found that a rubber composition obtained by using an aromatic oil having a DMSO extract content of less than 3% by weight and adding a dipentene aromatic vinyl copolymer resin having a softening point of 60 to 130°C, preferably 70 to 100°C, can be improved in grip performance, without any detrimental effect on the other performances when used as a tire tread part.

A petroleum-based process oil is a mixture of an extremely large number of low molecular weight hydrocarbon compounds. The properties thereof are determined by the ratios of aromatic, naphthenic and paraffinic components, the microforms of the individual component molecules (i.e., ratios of side chains and cyclic components), the molecular weight, etc. combined as the structure of the oil. The oil structure governs the affinity between the rubber and the oil, the molecular behavior of the rubber under stretching or dynamic conditions, the fluidity of the oil in the compound, the migration, etc. The results thereof are considered to be reflected in the unvulcanized and vulcanized physical properties of the rubber, but the detailed mechanism thereof has not yet been elucidated. In general, if the content CA of aromatic hydrocarbons is large, the affinity becomes strong and the tanδ under dynamic conditions increases. Process oil is used for saving energy at the time of producing rubber products, improving the processing productivity due to the decrease in the rubber viscosity, etc., but also has an effect on the quality characteristics of the finished product, in particular, for example, the fuel savings and grip performance of the tire product. To lower the tanδ for increasing the fuel economy, it is well-known in the art that an oil having a high ratio of naphthenic or paraffinic ingredients with a small aromatic hydrocarbon content CA (%) is suitable, while to increase the tanδ and to improve the grip performance, an aromatic oil having a large CA% is suitable.

The aromatic oil compounded into the rubber composition of the present invention, as explained above, is not particularly limited so long as the DMSO extract content is less than 3% by weight. Any commercially available oil may be used. Note that the DMSO extract content can be found, based on an IP346/92 method. If the DMSO extract content of the aromatic oil used is large, this is not preferable from the viewpoint of the environmental load.

The amount of the aromatic oil compounded into the rubber composition of the present invention is, based upon 100 parts by weight of the rubber, 5 to 50 parts by weight, preferably 10 to 45 parts by weight. If this amount is small, the processability deteriorates, and therefore, this is not preferred, while conversely if it is large, the processability deteriorates and the oil migrates to the adjoining compounds, and therefore, this is again not preferable. As another softening agent usable in the present invention, in addition to a softening agent of paraffin oil or naphthenic oil, dibutyl phthalate (DBP), di-(2-ethylhexyl) phthalate (DOP), di-(n-octyl) phthalate (DOP), di-(2-ethylhexyl) sebacate (DOS), di-(2-ethylhexyl) adipate (DOA) and other synthetic plasticizers etc. may be mentioned.

As the dipentene aromatic vinyl copolymers having a softening point of 60 to 130°C compounded into the rubber composition of the present invention, for example, those commercially available from Yasuhara Chemical, as YS Resin TO85 (i.e., softening point 85°C), YS Resin TO125 (i.e., softening point 125°C), YS Resin TO105, YS Resin 115, etc. may be used. Here, the "softening point" means the value measured by DSC (differential scan calorimetry). If the softening point is low, the grip performance becomes low, and therefore, this is not preferable, while conversely if high, the low temperature characteristics deteriorate, and therefore, this is not preferred either.

The amount of the dipentene aromatic vinyl copolymer resin having a softening point of 60 to 130°C compounded into the rubber composition of the present invention is, based upon 100 parts by weight of the rubber, 2 to 40 parts by weight, preferably 2 to 30 parts by weight, more preferably 2 to 15 parts by weight. If the amount compounded is too small, the grip performance is decreased, and therefore, this is not preferable, while conversely if too large, the processability deteriorates and the low temperature characteristics deteriorate, and therefore, this is not preferable either.

As the rubber usable for the rubber composition according to the present invention, any rubber usable for a tire, such as natural rubber (NR), various types of butadiene rubber (BR), various types of styrene-butadiene copolymer rubber (SBR), polyisoprene rubber (IR), butyl rubber (IIR) and other diene-based rubbers and the like may be mentioned. These may be used alone or in any combination thereof, depending upon the applications thereof. The above rubber includes oil-extended rubber composed of rubber in which an aromatic oil has been added in advance. The aromatic oil also has a DMSO extract content of less than 3% by weight.

The rubber composition according to the present invention may, in addition to the above ingredients, further include carbon black or silica or another filler, a vulcanization or cross-linking agent, a vulcanization or cross-linking accelerator, various types of oil, an antioxidant, a plasticizer or other various types of additives generally compounded into tire use or other rubber compositions. Such additives may be mixed by a general method to obtain compositions then used for vulcanization or cross-linking. The amounts of these additives may be made the conventional generally used amounts, so long as they do not adversely affect to the object of the present invention.

### EXAMPLES

Examples will now be used to further illustrate the present invention, but the present invention is by no means limited in scope to these Examples.

### Standard Example 1, Examples 1 to 3 and Comparative Examples 1 to 4

### Preparation of Samples

In each formulation shown in Table I, the components other than the vulcanization accelerator and sulfur were mixed in a 2-liter internal mixer for 6 minutes. When reaching 150°C, they were discharged to obtain a master batch. This master batch was mixed with the vulcanization accelerator and sulfur by an open roll to obtain a rubber composition. This rubber composition was used to evaluate the unvulcanized physical properties by the test methods shown below. The results are shown in Table I.

Next, the rubber composition thus obtained was vulcanized in a mold at 160°C for 20 minutes to prepare a vulcanized rubber sheet, which was then measured for the physical properties of the vulcanized rubber by the test methods shown below. The results are shown in Table I.

### Test Methods for Evaluation of Rubber Physical Properties

Hardness: Measured by a JIS K-6253 method.
M300 (300% modulus): Measured by a JIS K-6251 method, indicated indexed to value of Standard Example 1 as 100.
tanδ (0°C and 60°C): Measured using viscoelasticity spectrometer (Toyo Seiki Seisakusho viscoelasticity spectrometer) under conditions of a temperature of 0°C or 60°C, strain rate of 10±2% and frequency of 20 Hz and indicated indexed to value of Standard Example 1 as 100.

Abrasion resistance index: Measured using Lambourne Abrasion Tester according to a JIS K-6264 method under conditions of load of 4.0 kg (i.e., 39N) and slip rate of 30% and indicated indexed to value of Standard Example 1 as 100. The larger the index value, the better the abrasion resistance.

**Table I**

| | Stand. Ex. 1 | Comp. Ex. 1 | Comp. Ex. 2 | Comp. Ex. 3 | Comp. Ex. 4 | Ex. 1 | Ex. 2 | Ex. 3 |
|---|---|---|---|---|---|---|---|---|
| Formulation (parts by weight) | | | | | | | | |
| SBR1 | 110 | - | - | - | - | - | - | - |
| SBR2 | - | 110 | 110 | 110 | 110 | 110 | 110 | 110 |
| BR | 20 | 20 | 20 | 20 | 20 | 20 | 20 | 20 |
| Resin 1 | - | - | - | - | - | 5 | 10 | - |
| Resin 2 | - | - | - | - | - | - | - | 5 |
| Resin 3 | - | - | 5 | - | - | - | - | - |
| Resin 4 | - | - | - | 5 | - | - | - | - |
| Resin 5 | - | - | - | - | 5 | - | - | - |
| Aromatic oil | 10 | 10 | 7 | 7 | 7 | 7 | 4 | 7 |
| Silica | 40 | 40 | 40 | 40 | 40 | 40 | 40 | 40 |
| Carbon black | 40 | 40 | 40 | 40 | 40 | 40 | 40 | 40 |
| ZnO | 3 | 3 | 3 | 3 | 3 | 3 | 3 | 3 |
| Stearic acid | 2 | 2 | 2 | 2 | 2 | 2 | 2 | 2 |
| Antioxidant | 1 | 1 | 1 | 1 | 1 | 1 | 1 | 1 |
| Silane coupling | 5.6 | 5.6 | 5.6 | 5.6 | 5.6 | 5.6 | 5.6 | 5.6 |
| agent | | | | | | | | |
| Sulfur | 1.8 | 1.8 | 1.8 | 1.8 | 1.8 | 1.8 | 1.8 | 1.8 |
| Vulcanization | 1.8 | 1.8 | 1.8 | 1.8 | 1.8 | 1.8 | 1.8 | 1.8 |
| accelerator CZ | | | | | | | | |
| Vulcanization | 1.5 | 1.5 | 1.5 | 1.5 | 1.5 | 1.5 | 1.5 | 1.5 |
| accelerator DPG | | | | | | | | |

| Evaluated physical properties | | | | | | | | |
|---|---|---|---|---|---|---|---|---|
| Hardness | 70 | 68 | 70 | 71 | 70 | 70 | 70 | 70 |
| M300 | 100 | 100 | 90 | 99 | 98 | 99 | 97 | 99 |
| tanδ(0°C) | 100 | 95 | 105 | 107 | 106 | 106 | 110 | 109 |
| tanδ(60°C) | 100 | 94 | 101 | 101 | 102 | 100 | 101 | 100 |
| Abrasion resistance | 100 | 98 | 98 | 90 | 89 | 100 | 101 | 103 |

| | | | | | | | | |
|---|---|---|---|---|---|---|---|---|
| Notes to Table I SBR1: Nippon Zeon Nipol 9528R (DMSO extract of oil-extended oil: 24% by weight) SBR2: Oil-extended styrene-butadiene copolymer synthesized by emulsion polymerization (styrene 42.6 parts by weight, 1,3-butadiene 57.5 parts by weight, molecular weight adjuster (t-dodecyl mercaptan) 0.16 part by weight, polymerization initiator (diisopropyl benzene hydroperoxide) 0.1 part by weight, emulsifier (rosin soap) 2 parts by weight, polymerization temperature 8°C) and having an aromatic oil content of 37.5 parts by weight based upon 100 parts by weight of the styrene-butadiene copolymer. The type of the aromatic oil used had a DMSO extract content of 2.5% by weight. The SBR2 obtained had a styrene content of 36 to 38% by weight based upon the styrene-butadiene copolymer ingredient, a 1,4-cis content in the butadiene ingredient of 10%, a 1,4-trans content in the butadiene ingredient of 76%, a 1,2-vinyl content in the butadiene ingredient of 14% and a glass transition point (Tg) of -42°C. BR: Nippon Zeon BR1220 Resin 1: Yasuhara Chemical YS Resin TO85 (softening point 85°C) Resin 2: Yasuhara Chemical YS Resin TO125 (softening point 125°C) Resin 3: Arakawa Chemical Industries rosin resin "China Rosin WW" Resin 4: Tonex petroleum resin "Escolet 1102" Resin 5: Nippon Steel Chemical coumarone indene resin "Escron G-90" Aromatic oil: Showa Shell Oil Extract No. 4S (DMSO extract content 2.6% by weight) Silica: Degussa ULTRASIL VN-3 Carbon black: Cabot Japan Shoblack N234 ZnO: Seido Chemical Industry Zinc Oxide Type 3 Stearic acid: NOF Corporation Beads Stearic Acid Antiaging agent: Flexsys SANTOFLEX 6PPD Silane coupling agent: Degussa Si69 Sulfur: Tsurumi Chemical "Gold Flower" brand oil-treated sulfur powder Vulcanization accelerator CZ: Ouchi Shinko Chemical Industrial Noccelar CZ Vulcanization accelerator DPG: Flexsys PERKACIT DPG | | | | | | | | |

By combining a low PCA oil and a dipentene aromatic vinyl copolymer resin with the rubber composition, the indicator of the grip performance, that is, the tanδ (0°C), is increased, without causing decrease in the modulus, deterioration of the abrasion resistance and deterioration of the indicator of the rolling resistance, that is, the tanδ (60°C) (see Examples 1 to 3). Further, if combining a low PCA oil and another resin, while an increase in the tanδ (0°C) is seen, the modulus is decreased and the abrasion resistance is deteriorated (see Comparative Examples 1 to 5).

By adding a dipentene aromatic vinyl copolymer resin having a softening point of 60 to 130°C to a rubber composition containing an aromatic oil having a DMSO extract content of less than 3% by weight, it becomes possible to improve the grip performance of the rubber composition, without having a detrimental effect on the other performance and, for example, use for a tread of example pneumatic tire, etc. becomes possible.

## Claims

1. A rubber composition comprising 100 parts by weight of a rubber, 5 to 50 parts by weight of an aromatic oil having a dimethyl sulfoxide (DMSO) extract content measured by an IP346/92 method of less than 3% by weight and 2 to 40 parts by weight of a dipentene aromatic vinyl copolymer resin having a softening point of 60 to 130°C.

2. A rubber composition as claimed in claim 1, wherein the amount of the dipentene aromatic vinyl copolymer resin is 2 to 15 parts by weight per 100 parts by weight of the rubber.

3. A pneumatic tire using, as a tread part, a rubber composition according to claim 1 or 2.
